# EUROPEAN PATENT APPLICATION

(11) **EP 4 589 740 A1**
(43) Date of publication of application: **23.07.2025**
(21) Application number: 23886405.2
(22) Date of filing: 06.11.2023
(51) Int. Cl.: H01M 50/178, H01M 50/186, H01M 50/342, H01M 50/164, H01M 50/159, H01M 50/16, H01M 50/572, H01M 50/533

(54) **SECONDARY BATTERY**

(30) Priority: 04.11.2022 KR 20220146377; 04.11.2022 KR 20220146378; 04.11.2022 KR 20220146379; 03.11.2023 KR 20230150797
(71) Applicant: LG Energy Solution, Ltd., Seoul 07335 (KR)
(72) Inventor: LEE, Jae Ho, Daejeon 34122 (KR); KIM, Sang Hun, Daejeon 34122 (KR); KANG, Gyung Soo, Daejeon 34122 (KR)
(74) Representative: Plasseraud IP
(86) International application number: PCT/KR2023/017636
(87) International publication number: WO 2024/096711

(57) **Abstract**

The present invention relates to a secondary battery including an electrode assembly including an electrode tab, an exterior including an accommodation part that accommodates the electrode assembly, and an electrode lead connected to the electrode tab of the electrode assembly, and disposed inside the exterior, wherein the exterior further includes an exposure hole that is opened to expose a portion of the electrode lead to the outside of the exterior, wherein the electrode lead includes an exposed portion exposed to the outside of the exterior through the exposure hole, and a non-exposed portion connected to the exposed portion, and covered by the exterior to be non-exposed to the outside of the exterior, wherein the exposed portion include a protrusion protruding from the non-exposed portion toward the outside of the exterior.

## Description

### TECHNICAL FIELD

### CROSS-REFERENCE TO RELATED APPLICATION

The present application claims the benefit of the priority of Korean Patent Application Nos. 10-2022-0146377, filed on November 4, 2022, 10-2022-0146378, filed on November 4, 2022, 10-2022-0146379, filed on November 4, 2022, and 10-2023-0150797, filed on November 3, 2023, which are hereby incorporated by reference in their entirety.

### TECHNICAL FIELD

The present disclosure herein relates to a secondary battery.

### BACKGROUND ART

In general, secondary batteries refer to batteries, which are chargeable and dischargeable unlike non-rechargeable primary batteries, and are widely used in electronic devices such as mobile phones, notebook computers and camcorders, electric vehicles, or the like. In particular, lithium secondary batteries have a larger capacity and a higher energy density than nickel-cadmium batteries or nickel-hydrogen batteries, and thus utilization thereof is on a rapidly increasing trend.

According to the shape of a battery case, the secondary batteries may be classified into a cylindrical type battery and a prismatic type battery, each of which has an electrode assembly embedded in a cylindrical or prismatic metal can, a pouch type battery having an electrode assembly embedded in a pouch type case made of an aluminum laminate sheet, and the like.

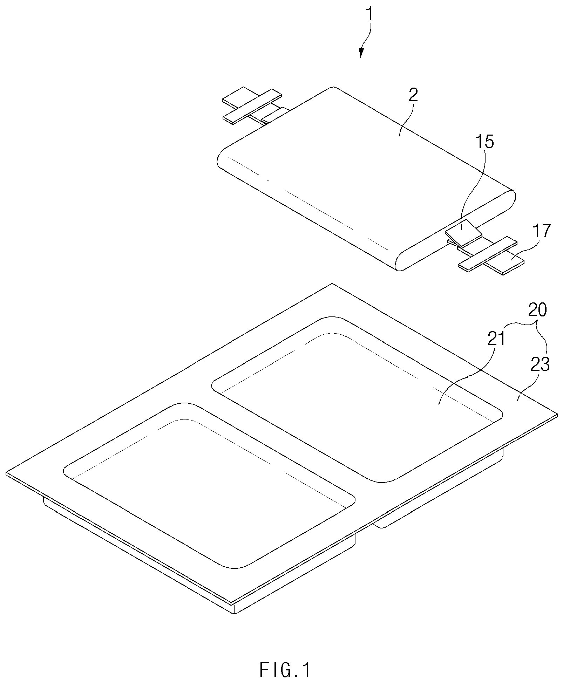

FIG. 1 is a view illustrating one example of a pouch type secondary battery. A pouch type secondary battery 1 includes an electrode assembly 2 in which an electrode and a separator are stacked alternately, and a pouch type exterior 20 in which the electrode assembly 2 is accommodated. Electrode tabs 15 may be connected to the electrodes of the electrode assembly 2, respectively. The electrode tabs 15 may be welded to each other in a predetermined area, and then be connected to an electrode lead 17 by welding. The exterior 20 includes an accommodation part 21 for accommodating the electrode assembly 2. The accommodation part 21 of the exterior 20 may be provided in one or two portions each having a recessed shape. FIG. 1 illustrates an example of the accommodation part 21 provided in two portions each having a recessed shape. A sealing part 23 (terrace) is formed around the accommodation part 21 by sealing.

The secondary batteries require prevention of occurrence of ignition or explosion in the secondary batteries even when an internal temperature or pressure rapidly increases. When this is not prevented, problems of thermal runaway or thermal propagation may occur. However, in pouch type secondary batteries according to the related art, the sealing part 23 is generally formed by heat sealing, and thus sealing strength of the sealing part 23 is not high enough to prevent or delay the ignition or explosion. In addition, as the electrode lead 17 passes through the sealing part 23 to be exposed to the outside of the exterior 20, a portion, through which the electrode lead 17 passes, of the sealing part 23 may have lower sealing strength than the other portion.

In particular, recently, there is a need for pouch type batteries in which venting occurs only at a particular point even at a very high temperature (e.g., 1,000°C). In the pouch type secondary batteries according to the related art, the sealing part 23 is generally formed by heat sealing between resin layers (which may be layers made of polypropylene) of the exterior 20. Thus, since the resin layers of the sealing part 23 may be melted at a very high temperature to cause the venting at an unintended point, the need as above is difficult to satisfy.

### DISCLOSURE OF THE INVENTION

### TECHNICAL PROBLEM

An object of the present invention is to provide a secondary battery that sufficiently secures sealing strength of a sealing part to be capable of preventing or delaying ignition or explosion from occurring in the secondary battery even when an internal temperature or pressure rapidly increases at a very high temperature.

In addition, another object of the present invention is to provide a secondary battery that is not provided with a portion, through which an electrode lead passes, of a sealing part of an exterior, and thus does not forma portion having relatively low sealing strength in the sealing part so that unintended venting does not occur in the sealing part even at a very high temperature.

Moreover, another object of the present invention is to provide a secondary battery in which a sealing area having lower sealing strength than a sealing part is provided in the inside of an exterior so that even when internal pressure rapidly increases at a very high temperature, the sealing area (i.e., unintended point) inside the exterior is first broken before breakage of the sealing part to reduce the internal pressure.

Moreover, another object of the present invention is to provide a secondary battery capable of easily electrically connecting an electrode lead disposed inside an exterior to another portion.

Moreover, another object of the present invention is to provide a secondary battery in which during formation of a sealing part, an exterior may not be damaged due to an electrode lead disposed inside the exterior.

### TECHNICAL SOLUTION

In an embodiment, a secondary battery may include an electrode assembly including an electrode tab, an exterior including an accommodation part that accommodates the electrode assembly, and an electrode lead connected to the electrode tab of the electrode assembly, and disposed inside the exterior, wherein the exterior further includes an exposure hole that is opened to expose a portion of the electrode lead to the outside of the exterior, wherein the electrode lead includes an exposed portion exposed to the outside of the exterior through the exposure hole, and a non-exposed portion connected to the exposed portion, and covered by the exterior to be non-exposed to the outside of the exterior, wherein the exposed portion includes a protrusion protruding toward the outside of the exterior more than the non-exposed portion.

In another embodiment, the protrusion may protrude more than the non-exposed portion by at least an outer surface of the exterior.

In another embodiment, the protrusion may be spaced a predetermined distance from an edge of the exposure hole.

In another embodiment, the secondary battery may further include an insulation member disposed in an empty space provided by the spacing, for electrical insulation between the protrusion and the exterior.

In another embodiment, the exterior may include an exterior sealing part that at least partially surrounds the accommodation part, and an exposure hole sealing part that surrounds the exposure hole, wherein the exterior sealing part is more tightly sealed than the exposure hole sealing part.

In another embodiment, the exterior sealing part may be formed by welding, and the exposure hole sealing part may be formed by fusion.

In another embodiment, the exterior may further include: a first exterior including a first metal layer; a second exterior disposed to face the first exterior so as to form the accommodation part together with the first exterior, and including a second metal layer; an exterior sealing part that couples the first and second exteriors to each other to be sealed, and at least partially surrounds the accommodation part; and an exposure hole sealing part that is disposed on an exposure hole exterior that is an exterior, in which the exposure hole is defined, of the first and second exteriors, and surrounds the exposure hole.

In another embodiment, the exterior sealing part may be formed by welding between the first and second metal layers.

In another embodiment, the first exterior may further include a first resin layer disposed inside the first metal layer, the second exterior may further include a second resin layer disposed inside the second metal layer to face the first resin layer, and the exterior sealing part may be formed by welding of the first and second metal layers in a state in which the first and second metal layers are in direct contact with each other without the first and second resin layers.

In another embodiment, each of the first and second metal layers may include stainless steel.

In another embodiment, the secondary battery may further include an insulation film disposed between the exposure hole exterior and the electrode lead so as to surround a portion, which is exposed through the exposure hole, of the electrode lead, wherein the exposure hole sealing part is formed by fusion between the insulation film and a resin layer of the exposure hole exterior, which is disposed to face the insulation film.

In another embodiment, the exterior sealing part may be provided to entirely surround the accommodation part of the exterior except a portion at which the first and second exteriors are connected to each other, and the electrode lead may be disposed inside the exterior without passing through the exterior sealing part.

In another embodiment, the electrode lead may extend in a direction crossing an extension direction of the electrode tab to be disposed inside the exterior.

In another embodiment, the accommodation part may include an electrode assembly accommodation part that accommodates the electrode assembly, and an electrode lead accommodation part that accommodates at least a portion of the electrode lead.

In another embodiment, the electrode assembly accommodation part may be pre-molded in a shape for accommodating the electrode assembly before the electrode assembly is accommodated, and the electrode lead accommodation part may be pre-molded in a shape for accommodating the electrode lead before the electrode lead is accommodated.

In another embodiment, the electrode lead may be provided to be electrically connected to an electrode lead of another secondary battery through the protrusion.

In another embodiment, the secondary battery may further include an insulation film disposed between the exposure hole exterior and the electrode lead so as to surround a portion, which is exposed through the exposure hole, of the electrode lead, wherein a surface-treated part for an increase in surface roughness is partially provided on a surface of the electrode lead, wherein an area in which the surface-treated part is provided includes an area, which faces the insulation film, of the surface of the electrode lead.

In another embodiment, a secondary battery may include an electrode assembly comprising an electrode tab, an exteriorincluding an accommodation part that accommodates the electrode assembly, and an electrode lead connected to the electrode tab of the electrode assembly, and disposed inside the exterior, wherein the exterior further includes an exposure hole that is opened to expose at least a portion of the electrode lead to an outside of the exterior.

In another embodiment, the electrode lead may be provided to be electrically connected to an electrode lead of another secondary battery through the exposure hole.

In another embodiment, the electrode lead may extend in a direction crossing an extension direction of the electrode tab, and be disposed inside the exterior so that the electrode tab is disposed on a central portion of the electrode lead on the basis of the crossing direction.

In another embodiment, the electrode tab may be bent toward one side surface of the electrode assembly, from which the electrode tab protrudes, so that one side surface of the electrode lead faces the one side surface of the electrode assembly.

In another embodiment, the electrode tab may be bent toward an outermost surface of the electrode assembly so that one side surface of the electrode lead faces the outermost surface of the electrode assembly on the basis of a direction in which an electrode and a separator of the electrode assembly are stacked.

In another embodiment, a secondary battery may include an electrode assembly including an electrode tab, an exterior including an accommodation part that accommodates the electrode assembly, and an electrode lead connected to the electrode tab of the electrode assembly, and disposed inside the exterior, wherein the accommodation part includes an electrode assembly accommodation part that accommodates the electrode assembly, and an electrode lead accommodation part that accommodates at least a portion of the electrode lead.

In another embodiment, the exterior may further include an exterior sealing part that at least partially surrounds the accommodation part, wherein the electrode lead accommodation part is disposed on the exterior sealing part to be disposed inside the exterior to accommodate the electrode lead.

In another embodiment, a side, which faces the electrode assembly accommodation part, of the electrode lead accommodation part may communicate with the electrode assembly accommodation part, and the other sides of the electrode lead accommodation part may be surrounded by the exterior sealing part.

In another embodiment, the exterior may further include an exposure hole that is opened to expose at least a portion of the electrode lead to an outside of the exterior.

In another embodiment, the electrode tab may be bent toward one side surface of the electrode assembly, from which the electrode tab protrudes, so that one side surface of the electrode lead faces the one side surface of the electrode assembly, and the exposure hole may be defined in one side surface of the exterior, which faces the other side surface of the electrode lead due to bending of the electrode tab.

In another embodiment, the electrode tab may be bent toward an outermost surface of the electrode assembly so that one side surface of the electrode lead faces the outermost surface of the electrode assembly on the basis of a direction in which an electrode and a separator of the electrode assembly are stacked, and the exposure hole may be defined in one side surface of the exterior, which faces another side surface of the electrode lead due to the bending of the electrode tab.

### ADVANTAGEOUS EFFECTS

According to the present invention, the electrode lead may be disposed inside the exterior, and the electrode lead may be exposed through the exposure hole of the exterior so that the edge of the exterior is entirely sealed in the state in which the portion, through which the electrode lead passes, of the edge of the exterior is not provided. Accordingly, the overall sealing of the exterior may be tightly performed.

According to the present invention, the exterior sealing part may be provided to have the relatively high sealing strength. Thus, even when the temperature or the internal pressure of the secondary battery rapidly increase, the ignition or explosion may be prevented or delayed from occurring in the secondary battery. In addition, the exposure hole sealing part may be sealed to have the relatively low sealing strength so that when the internal pressure of the secondary battery rapidly increases, the breakage of the exposure hole sealing part is first induced (the venting is generated at the intended point) to reduce the internal pressure before the breakage of the exterior sealing part.

According to the present invention, the exterior sealing part may be formed by welding between the metal layers having the very high melting point, so that the sealing strength of the exterior sealing part is very high. Accordingly, the sealing part may not be broken even at the very high temperature.

According to the present invention, the electrode lead may include the protrusion protruding toward the outside of the exterior, and thus the electrode lead may be easily electrically connected to the other portion.

According to the present invention, the electrode lead accommodation part may accommodate the electrode lead, and thus the damage caused by the electrode lead may not occur in the exterior during the process of sealing the edge of the exterior to form the exterior sealing part.

### BRIEF DESCRIPTION OF THE DRAWINGS

FIG. 1 is a view illustrating one example of a pouch type secondary battery.
FIG. 2 is a perspective view illustrating a secondary battery according to Embodiment 1 of the present invention.
FIG. 3 is an exploded perspective view of the secondary battery in FIG. 2.
FIGS. 4 and 5 are cross-sectional views illustrating a layer structure of an exterior of the secondary battery in FIG. 2.
FIG. 6 is a perspective view illustrating a secondary battery according to Embodiment 2 of the present invention.
FIG. 7 is an exploded perspective view of the secondary battery in FIG. 6.
FIG. 8 is an exploded perspective view illustrating a modified example 1 of the secondary battery in FIG. 7.
FIG. 9 is an exploded perspective view illustrating a modified example 2 of the secondary battery in FIG. 7.
FIG. 10 is an exploded perspective view illustrating a modified example 3 of the secondary battery in FIG. 7.
FIG. 11 is an exploded perspective view illustrating a modified example 4 of the secondary battery in FIG. 7.
FIG. 12 is a perspective view illustrating a secondary battery according to Embodiment 3 of the present invention.
FIG. 13 is an exploded perspective view of the secondary battery in FIG. 12.
FIG. 14 is a cross-sectional view taken along a line A-A' in FIG. 12.
FIG. 15 is a cross-sectional view illustrating another example in which an insulation member is provided.
FIGS. 16 and 17 are perspective views for explaining electrical connection of the secondary batteries according to Embodiment 1.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

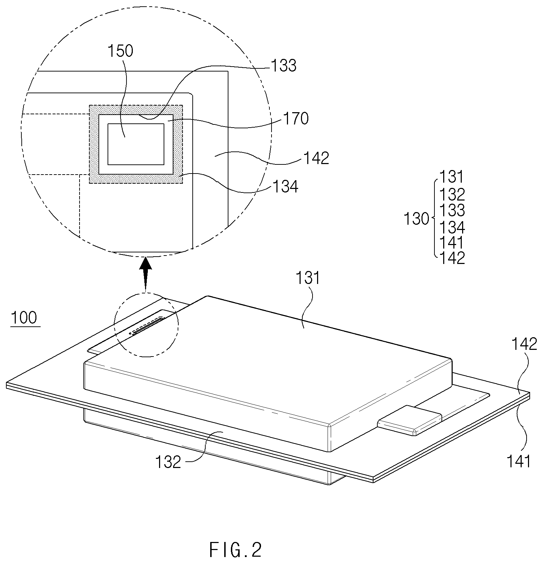

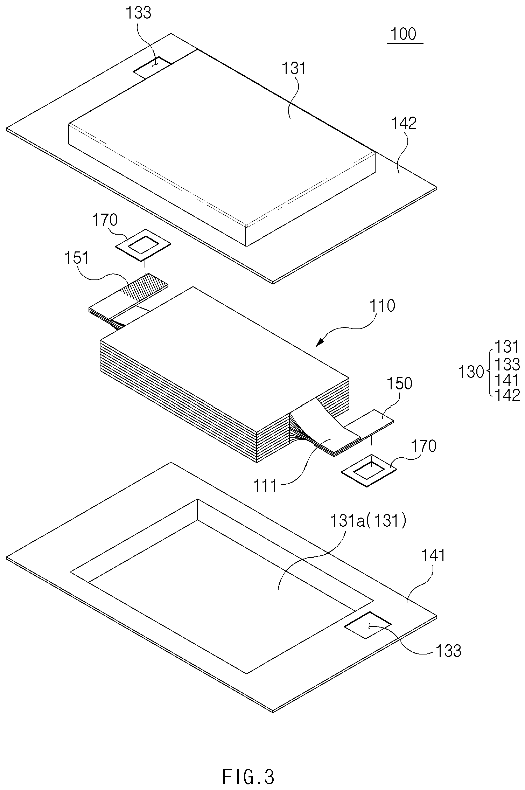

FIG. 2 is a perspective view illustrating a secondary battery according to Embodiment 1 of the present invention. FIG. 3 is an exploded perspective view of the secondary battery in FIG. 2. As illustrated in FIGS. 2 and 3, a secondary battery 100 according to this embodiment may include an electrode assembly 110, an exterior 130, and an electrode lead 150. Hereinafter, the secondary battery 100 according to this embodiment will be described in detail mainly with reference to FIG. 3. For reference, the same details of the secondary battery according to Embodiment 1 are applicable to secondary batteries according Embodiments 2 and 3 to be described later as long as there is no confliction therebetween.

### Overall structure of secondary battery

As illustrated in FIG. 3, the electrode assembly 110 may be provided by staking an electrode and a separator alternately. The electrode may include a positive electrode and a negative electrode. The electrode assembly 110 may include an electrode tab 111. A separately provided electrode tab may be connected to the electrode, and a portion of a current collector constituting the electrode may be used as an electrode tab.

The exterior 130 may include an accommodation part 131 for accommodating the electrode assembly 110. The exterior 130 may be a pouch type exterior.

The exterior 130 may be provided so that first and second exteriors 141 and 142 disposed to face each other are coupled to be sealed to each other in a state in which the electrode assembly 110 is accommodated. As illustrated in FIG. 3, the first and second exteriors 141 and 142 may be coupled to each other in a separately provided state. Here, edges of the first and second exteriors 141 and 142 may be entirely sealed. An exterior sealing part 132 (see FIG. 2) to be described later may be formed by this sealing. Alternatively, the first and second exteriors may be coupled to each other by being provided as one portion and a remaining portion of one exterior, which are disposed to face each other when the one exterior is folded (see FIG. 1). Here, a remaining edge except a portion at which the first and second exteriors are connected to each other, i.e., a portion at which the one exterior is folded, may be sealed. For reference, as described later, at least a portion of the electrode lead 150 may be disposed on the exterior sealing part 132, and when the edges of the first and second exteriors 141 and 142 are sealed to each other with the electrode lead 150 therebetween, a portion outward protruding to be convex due to the electrode lead 150 or the like may be provided on the first and second exteriors 141 and 142 as illustrated in FIG. 2.

The accommodation part 131 of the exterior 130 may be pre-molded in a shape for accommodating the electrode assembly 110 before the first and second exteriors 141 and 142 are coupled. For example, the accommodation part 131 may include an electrode assembly accommodation part 131a that is pre-molded before the electrode assembly 110 is accommodated. When the first and second exteriors 141 and 142 have film shapes, the accommodation part 131 may be provided by pressing one or both of the first and second exteriors 141 and 142 by using a punch to provide an inner space, and coupling these exteriors 141 and 142 to face each other. FIG. 3 illustrates an example in which the inner space is defined in each of the first and second exteriors 141 and 142. For reference, FIGS. 2 and 3 illustrate examples of a battery in which the accommodation part 131 is provided in each of the first and second exteriors 141 and 142. However, the details of this embodiment are also applicable to batteries in which an accommodation part is provided in one of first and second exteriors. The same applies to other embodiments to be described later.

The electrode lead 150 may be connected to the electrode tab 111 of the electrode assembly 110. The electrode lead 150 may be connected to the electrode tabs 111 by being welded to the electrode tabs 111 having been welded to each other in a predetermined area.

The electrode lead 150 may be disposed inside the exterior 130.In a secondary battery according to the related art, an electrode lead includes a portion disposed inside an exterior, and a portion extending to the outside of the exterior for electrical connection with another secondary battery. However, the electrode lead 150 according to this embodiment may not include a portion extending to the outside of the exterior 130.

For example, as illustrated in FIGS. 2 and 3, the electrode lead 150 according to this embodiment may be disposed inside the exterior 130 without extending from the edge of the exterior 130. When there is a portion at which the first and second exteriors 141 and 142 are connected to each other, the exterior sealing part 132 may be provided to entirely surround the accommodation part 131 except this connection portion (this portion is not present in the secondary batteries in FIGS. 2 and 3) (see FIG. 2), and the electrode lead 150 (may partially overlap but) may be disposed inside the exterior 130 without passing through the exterior sealing part 132.

For reference, the phrase "except a portion at which the first and second exteriors are connected to each other" involves the meaning that the secondary battery according to this embodiment "includes a portion at which the first and second exteriors are connected to each other." If there is no portion at which the first and second exteriors are connected to each other, there is no portion to be "excepted," and thus the exterior sealing part may be provided to surround the entirety of the accommodation part.

As illustrated in FIG. 2, the exterior 130 according to this embodiment may include an exposure hole 133 that is opened so as to expose at least a portion of the electrode lead 150 to the outside of the exterior 130. A portion of the exterior 130 may be cut at a portion corresponding to the electrode lead 150 to define the exposure hole 133. For example, the exterior 130 may be penetrated to define the exposure hole 133 during a process of forming the accommodation part 131 in the exterior 130 having a film shape, or before or after this process. FIG. 3 illustrates an example in which the exposure hole 133 is defined in each of the first and second exteriors 141 and 142. Even when the electrode lead 150 does not include the portion extending to the outside of the exterior 130, the electrode lead 150 may be exposed to the outside of the exterior 130 through the exposure hole 133.

In the secondary battery 100 according to this embodiment, as the electrode lead 150 is disposed inside the exterior 130, and the electrode lead 150 is exposed through the exposure hole 133 of the exterior 130, the edge of the exterior 130 may be entirely sealed in a state in which a portion, through which the electrode lead 150 passes, of the edge of the exterior 130 is not provided. The portion, through which the electrode lead passes, of the edge of the exterior is a portion at which the first and second exteriors may be more lightly sealed, compared to the other portion. As the secondary battery 100 according to this embodiment does not include this portion, the first and second exteriors 141 and 142 may be tightly sealed entirely. Even when a temperature or internal pressure of the secondary battery 100 rapidly increases, ignition or explosion may be prevented or delayed from occurring in the secondary battery 100. Accordingly, thermal runaway or thermal propagation may be prevented or delayed.

### Exterior sealing part and exposure hole sealing part

As illustrated in FIG. 2, the exterior 130 may include the exterior sealing part 132 provided to at least partially surround the accommodation part 131.The exterior sealing part 132 may be formed by sealing the edges of the first and second exteriors 141 and 142 together.

As illustrated in FIGS. 2 and 3, when the first and second exteriors 141 and 142 are separately provided, the exterior sealing part 132 may be provided entirely on the edges of the first and second exteriors 141 and 142. Here, the exterior sealing part 132 may be provided so as to entirely surround the accommodation part 131. When the first and second exteriors are provided by folding one exterior, the exterior sealing part may be provided on the edges of the first and second exteriors except the folded portion. The exterior sealing part may be also provided on a boundary between the folded portion and the unfolded portion, i.e., both ends of the folded portion. Here, the exterior sealing part may be provided so as to surround only a portion of the accommodation part. The exterior sealing part 132 according to this embodiment may be formed by welding as described later.

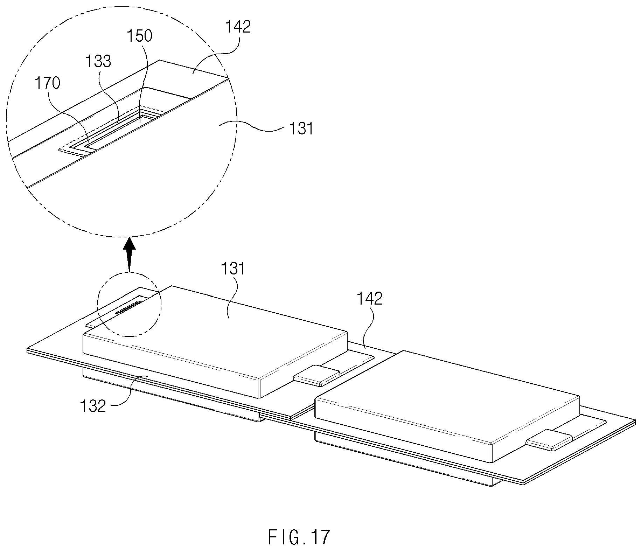

As illustrated in FIG. 2, the exterior 130 may include an exposure hole sealing part 134 provided to surround the exposure hole 133 (see dotted lines of an enlarged portion in FIG. 17). As the exposure hole 133 is a portion at which sealing of the exterior 130 is broken by the exterior sealing part 132, sealing of the exposure hole 133 may be necessary, and the exposure hole sealing part 134 may perform the sealing. The exposure hole 133 may be defined in one or each of the first and second exteriors 141 and 142, and the exposure hole sealing part 134 may be provided on an exterior, in which the exposure hole 133 is defined, of the first and second exteriors 141 and 142 (hereinafter referred to as an "exposure hole exterior"). The exposure hole sealing part 134 according to this embodiment may be formed by fusion, for example, heat sealing, as described later.

In the secondary battery 100 according to this embodiment, the exterior sealing part 132 may be more tightly sealed than the exposure hole sealing part 134. In the secondary battery 100 according to this embodiment, the exterior sealing part 132 may be sealed to have relatively high sealing strength so that even when the temperature or internal pressure of the secondary battery 100 rapidly increases, the ignition or explosion may be prevented or delayed from occurring in the secondary battery 100. In addition, the exposure hole sealing part 134 may be sealed to have relatively low sealing strength so that when the internal pressure of the secondary battery 100 rapidly increases, the breakage of the exposure hole sealing part 134 is first induced (i.e., venting is generated at an intended point) to reduce the internal pressure before breakage of the exterior sealing part 132.

### Detailed structure of exterior sealing part

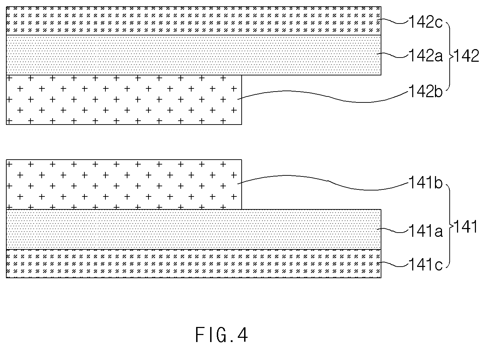

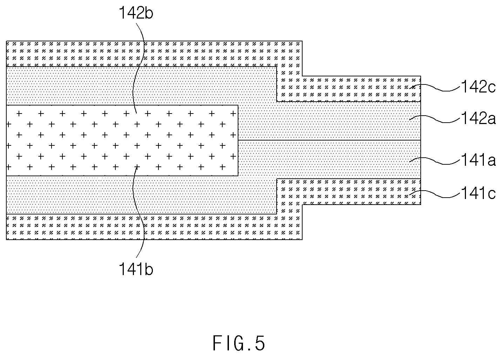

As described above, the exterior 130 may include a first exterior 141, and a second exterior 142 disposed to face the first exterior 141 so as to provide the accommodation part 131 together with the first exterior 141. As illustrated in FIG. 4, the first and second exteriors 141 and 142 may include first and second metal layers 141a and 142a, respectively. As illustrated in FIG. 5, the exterior sealing part 132 that couples the first and second exteriors 141 and 142 to each other to be sealed may be formed by welding between these metal layers 141a and 142a. The welding may be laser welding. The first metal layer 141a may include aluminum. Alternatively, the first metal layer 141a may include stainless steel. For example, the first metal layer 141a may be a layer made of stainless steel. The second metal layer 142a may also include aluminum or stainless steel.

Recently, there is a demand for a pouch type battery in which venting occurs only at a particular point even at a very high temperature (e.g., 1,000°C). In the pouch type secondary batteries according to the related art, the exterior sealing part is generally formed by heat sealing between resin layers (which may be layers made of polypropylene) of the exterior, and the resin layers may be melted at a very high temperature to cause the venting at an unintended point.

However, like the secondary battery 100 according to this embodiment, when the exterior sealing part is formed by welding between metal layers (particular, layers made of stainless steel) having a very high melting point, the sealing strength of the exterior sealing part is very high, and thus the sealing part may not be broken even at a very high temperature. In addition, when the exterior sealing part is formed by welding entirely on the edge of the exterior except the portion at which the first and second exteriors are coupled to each other, the effects as above may be more increased. When the internal pressure of the secondary battery is very high, venting may be induced through the exposure hole sealing part having lower sealing strength than the exterior sealing part.

As illustrated in FIG. 4, the first exterior 141 may include a first resin layer 141b disposed inside the first metal layer 141a. The first resin layer 141b may be a layer made of polypropylene (PP). The same applies to a second resin layer 142b to be described later. The first resin layer 141b requires high insulating properties and corrosion resistance, and the first resin layer 141b may be made of other resins that satisfy this requirement. The second exterior 142 may also include the second resin layer 142b that is disposed inside the second metal layer 142a to face the first resin layer 141b.

As illustrated in FIG. 5, the exterior sealing part 132 may be formed by welding between the first and second metal layers 141a and 142a in a state in which the first and second metal layers 141a and 142a are in direct contact with each other without the first and second resin layers 141b and 142b. When the metal layers are directly welded without the resin layers, the sealing strength of the exterior sealing part 132 may be more increased.

As illustrated in FIG. 4, the first exterior 141 may include an outer resin layer 141c disposed outside the first metal layer 141a. The second exterior 142 may also include an outer resin layer 142c disposed outside the second metal layer 142a. The outer resin layer may be a layer made of polyethylene terephthalate (PET). The outer resin layer needs to protect the secondary battery and also to electrically insulate the secondary battery, and the outer resin layer may be made of other resins that satisfy this requirement. However, if the outer resin layer interrupts the formation of the exterior sealing part by welding of the metal layers, the outer resin layer may not be provided in at least a portion on which the exterior sealing part is provided.

### Detailed structure of exposure hole sealing part

As illustrated in FIG. 3, the secondary battery 100 according to this embodiment may further include an insulation film 170 disposed between the electrode lead 150 and each of exposure hole exteriors 141 and 142, which is an exterior, in which the exposure hole 133 is defined, of the first and second exteriors 141 and 142. The insulation film 170 may be disposed only between a surface, which faces the exposure hole 133, of both surfaces of the electrode lead 150 and the exterior in which the exposure hole 133 is defined. The insulation film 170 may be provided so as to surround a portion, which is exposed through the exposure hole 133, of the electrode lead 150 (see the enlarged view in FIG. 2). For example, the insulation film 170 may be provided in the form of a rectangular frame. As illustrated in FIG. 2, the exposure hole sealing part 134 may be formed by fusion between the insulation film 170 and the resin layer of the exposure hole exterior 142 disposed to face the insulation film 170. One surface of the insulation film 170 may be coupled to the resin layer of the exposure hole exterior 142 to be sealed by fusion, and the other surface thereof may be coupled to the electrode lead 150 to be sealed by fusion, adhesion, or the like.

A surface-treated part 151 may be provided on a surface of the electrode lead 150 in order to improve bond ability with the insulation film 170. The same applies to another embodiment/modified example to be described later. The surface-treated part 151 may be formed by performing a mechanical treatment or a chemical treatment on the surface of the electrode lead 150. A laser irradiation method, a sand blasting method, or the like may be used as the mechanical treatment. Alumite processing, etching, or the like may be used as the chemical treatment. These treatments may increase surface roughness of the electrode lead 150.

As illustrated in FIG. 3, the surface-treated part 151 may be provided only on a partial area of the surface of the electrode lead 150. The area in which the surface-treated part 151 is provided may include an area, which faces the insulation film 170, of the surface of the electrode lead 150. For example, the area in which the surface-treated part 151 is provided may be provided as an area having a frame shape that is an area formed when the insulation film 170 is projected onto the electrode lead 150. Alternatively, as illustrated in FIG. 3, the area in which the surface-treated part 151 is provided may be provided as an area having a rectangular shape that includes an area formed when the insulation film 170 is projected onto the electrode lead 150.

### Embodiment 2

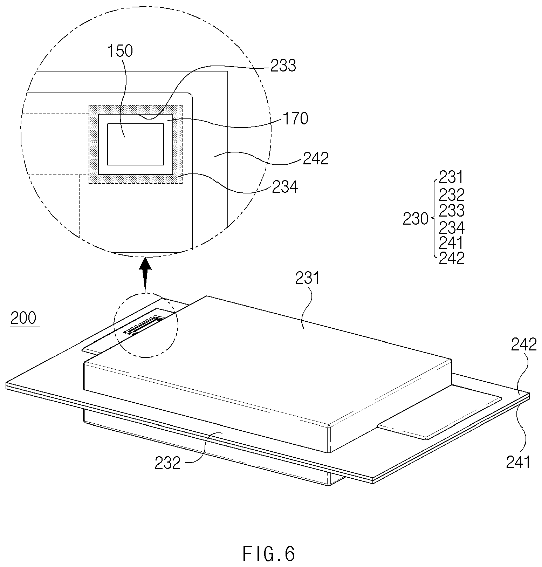

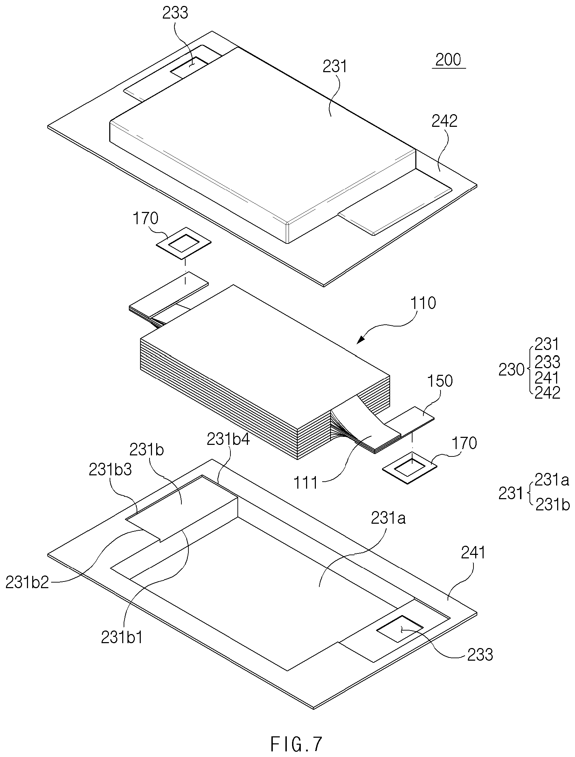

FIG. 6 is a perspective view illustrating a secondary battery according to Embodiment 2 of the present invention. FIG. 7 is an exploded perspective view of the secondary battery in FIG. 6. The secondary battery according to Embodiment 2 is different from the secondary battery according to Embodiment 1 in terms of the structure of the accommodation part. Hereinafter, the secondary battery according to Embodiment 2 will be described by focusing on this difference. For reference, the same details of the secondary battery according to Embodiment 2 are applicable to the secondary battery according Embodiment 1 described above and a secondary battery according Embodiment to be described later as long as there is no confliction therebetween.

As illustrated in FIG. 7, a secondary battery 200 according to this embodiment may include an electrode assembly 110, an exterior 230, and an electrode lead 150. The electrode assembly 110 and the electrode lead 150 may be the same as those described above.

The exterior 230 may include an accommodation part 231 for accommodating the electrode assembly 110. The exterior 230 may be a pouch type exterior. The exterior 230 may be provided so that first and second exteriors 241 and 242 disposed to face each other are coupled to each other to be sealed in a state in which the electrode assembly 110 is accommodated. Here, edges of the first and second exteriors 241 and 242 may be sealed entirely or partially. An exterior sealing part 232 (see FIG. 6) to be described later may be formed by this sealing. The accommodation part 231 of the exterior 230 may be pre-molded in a shape for accommodating the electrode assembly 110 before the first and second exteriors 241 and 242 are coupled.

As illustrated in FIG. 6, the exterior 230 may include an exposure hole 233 that is opened so as to expose at least a portion of the electrode lead 150 to the outside of the exterior 230.

The exterior 230 may include an exposure hole sealing part 234 provided to surround the exposure hole 233. The exposure hole 233 may be defined in one or each of the first and second exteriors 241 and 242, and the exposure hole sealing part 234 may be provided on an exterior (exposure hole exterior), in which the exposure hole 233 is defined, of the first and second exteriors 241 and 242.

The secondary battery 200 according to this embodiment may include an insulation film 170 (see FIG. 7) disposed between the electrode lead 150 and each of exposure hole exteriors 241 and 242. The insulation film 170 may be the same as that described above.

As illustrated in FIG. 7, the accommodation part 231 according to this embodiment may include an electrode assembly accommodation part 231a that accommodates the electrode assembly 110. The accommodation part 231 may include an electrode lead accommodation part 231b that accommodates at least a portion of the electrode lead 150. According to the shape of the accommodation part 231, a portion of the electrode lead 150 may be accommodated in the electrode assembly accommodation part 231a together with the electrode assembly 110, and the other portion thereof may be accommodated in the electrode lead accommodation part 231b.

The electrode lead 150 according to this embodiment may be disposed inside the exterior 230 as described above. The electrode lead accommodation part 231b may also be disposed inside the exterior 230 to corresponding to the electrode lead 150. For example, as illustrated in FIG. 7, the electrode lead accommodation part 231b may be disposed inside the exterior 230 without extending from the edge of the exterior 230.

The electrode lead 150 may be at least partially disposed on the exterior sealing part 232 (see FIG. 6) inside the exterior 230. However, when the electrode lead 150 is disposed between the first and second exteriors 241 and 242 during a process of sealing the edge of the exterior 230 in order to form the exterior sealing part 232, the electrode lead 150 may apply force to the inside of the first and second exteriors 241 and 242 to cause damage to the exteriors 241 and 242 during the sealing. For example, the first and second resin layers 141b and 142b (see FIG. 4) of the exteriors 241 and 242 may be damaged. In the exteriors 241 and 242 according to this embodiment, as the electrode lead 150 is accommodated in the electrode lead accommodation part 231b disposed on the exterior sealing part 232 of the exteriors 241 and 242, the problems as above may not occur.

As illustrated in FIG. 7, a side 231b1, which faces the electrode assembly accommodation part 231a, of the electrode lead accommodation part 231b may communicate with the electrode assembly accommodation part 231a. The other sides 231b2, 231b3 and 231b4 of the electrode lead accommodation part 231b may be surrounded by the exterior sealing part 232. Accordingly, the electrode lead accommodation part 231b may be completely sealed from the outside of the exterior 230.

The electrode assembly accommodation part 231a may be pre-molded in a shape for accommodating the electrode assembly 110 before the electrode assembly 110 is accommodated. For example, the exterior 230 having a film shape may be pressed to form the electrode assembly accommodation part 231a. The electrode lead accommodation part 231b may also be pre-molded in a shape for accommodating the electrode lead 150 before the electrode lead 150 is accommodated. The electrode lead accommodation part 231b may be formed by pressing the exterior 230 having a film shape during the process of forming the electrode assembly accommodation part 231a or before or after this process.

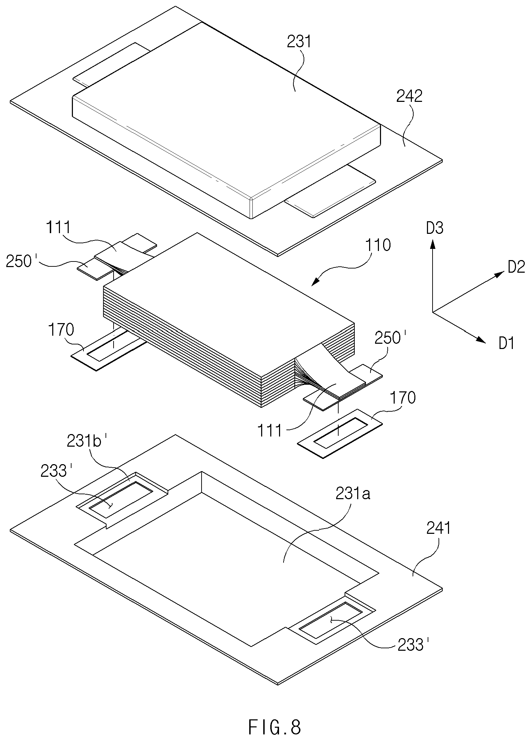

The electrode lead 150 may extend in a direction crossing an extension direction of the electrode tab 111 to be disposed inside the exterior 230. For example, as illustrated in FIG. 7, the electrode lead 150 may be disposed in a direction (see D2 in FIG. 8) perpendicular to the extension direction (see D1 in FIG. 8) of the electrode tab 111. Here, the electrode lead accommodation part 231b may be provided to correspond to a direction in which the electrode lead 150 is disposed. As the electrode lead 150 is disposed as above, an increase in size of the exterior 230 according to the disposing of the electrode lead 150 inside of the exterior 230 may be minimized.

### Modified examples of Embodiment 2

The secondary battery according to Embodiment 2 may be modified as follows. The same modified examples may apply to the secondary battery according to Embodiment 1 except the electrode lead accommodation part.

FIG. 8 is an exploded perspective view illustrating a modified example 1 of the secondary battery in FIG. 7. An electrode lead 250' according to the modified example 1 may extend in a direction (e.g., direction D2) crossing the extension direction D1 of the electrode tab 111, and be disposed so that the electrode tab 111 is disposed on a central portion of the electrode lead 250' on the basis of the crossing direction. An electrode lead accommodation part 231b' may also be disposed to correspond to the electrode lead 250'. All of exposure holes 233' may be provided in a first exterior 241.

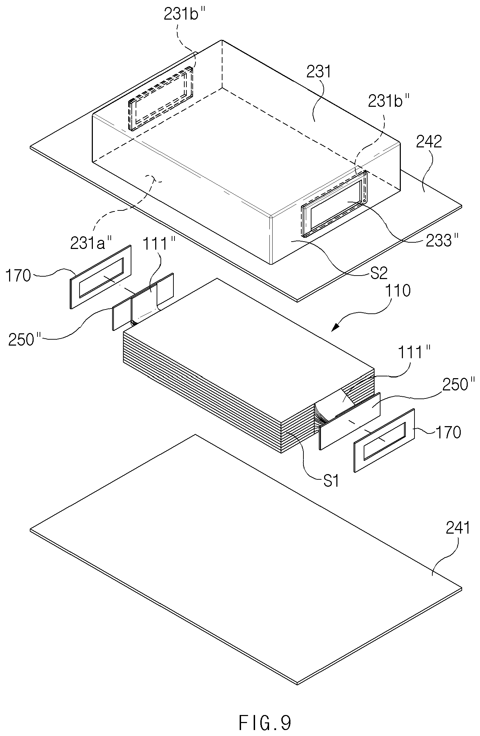

FIG. 9 is an exploded perspective view illustrating a modified example 2 of the secondary battery in FIG. 7. An electrode tab 111'' according to a modified example 2 may be bent toward one side surface S1 of an electrode assembly 110, from which the electrode tab 111'' protrudes, so that one side surface of an electrode lead 250'' faces the one side surface S1 of the electrode assembly 110. Due to this bending, the other side surface of the electrode lead 250'' may be disposed to face one side surface S2 of a second exterior 242 that defines an electrode assembly accommodation part 231a''. An exposure hole 233" may be provided in the one side surface S2 of the second exterior 242 which the other side surface of the electrode lead 250'' faces. An electrode lead accommodation part 231b'' may also be provided in the one side surface S2 of the second exterior 242 to correspond to the exposure hole 233''. For reference, FIG. 9 illustrates an example of a battery in which the accommodation part 231 is provided only in the second exterior 242. When both a positive electrode tab and a negative electrode tab protrude from the same side surface of the electrode assembly, the exposure hole may also be defined in the same side surface of the exterior to correspond thereto.

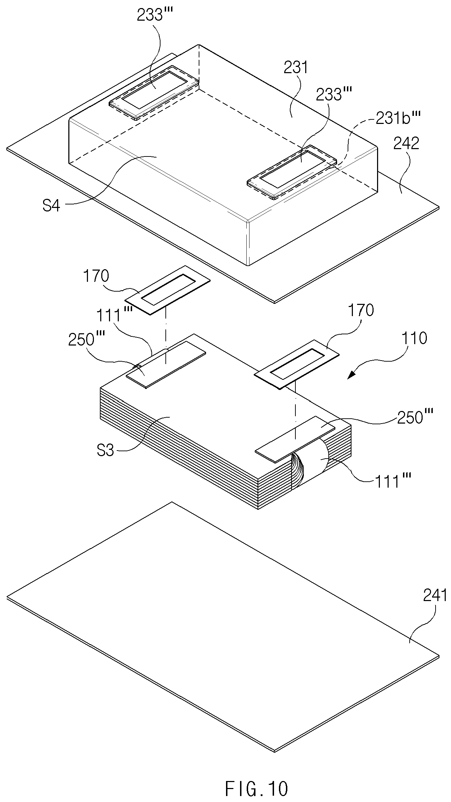

FIG. 10 is an exploded perspective view illustrating a modified example 3 of the secondary battery in FIG. 7. An electrode tab 111‴ according to a modified example 3 may be bent toward the outermost surface S3 of an electrode assembly 110 so that one side surface of an electrode lead 250‴ faces the outermost surface S3 on the basis of a direction (see D3 in FIG. 8) in which an electrode and a separator of the electrode assembly 110 are stacked. Due to this bending, the other side surface of the electrode lead 250‴ may be disposed to face an upper side surface S4 of an exterior 242. An exposure hole 233‴ may be provided in the upper side surface S4 of the second exterior 242 which the other side surface of the electrode lead 250‴ faces. An electrode lead accommodation part 231b''' may also be provided in the upper side surface S4 of the second exterior 242 to correspond to the exposure hole 233‴. For reference, FIG. 10 illustrates an example of a battery in which the accommodation part 231 is provided only in the second exterior 242. When both a positive electrode tab and a negative electrode tab protrude from the same side surface of the electrode assembly, the exposure hole may also be defined to be parallel to the upper side surface of the exterior to correspond thereto.

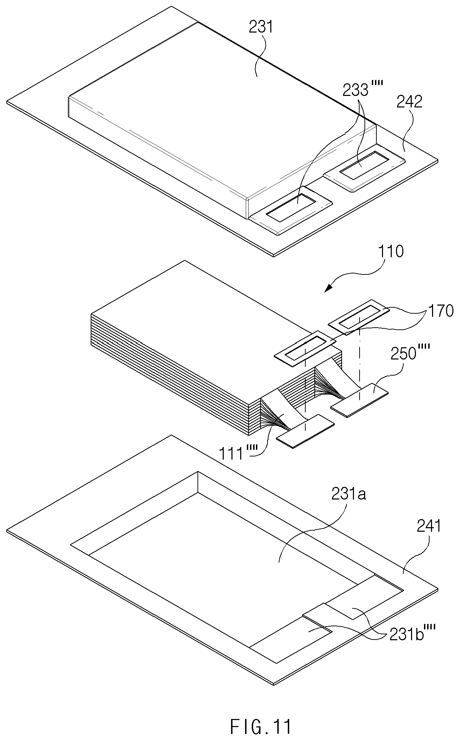

FIG. 11 is an exploded perspective view illustrating a modified example 4 of the secondary battery in FIG. 7. All of electrode tabs 111ʺʺ according to the modified example 4 may protrude from the same surface of an electrode assembly 110. For example, both of a positive electrode tab and a negative electrode tab protrude from the same surface of the electrode assembly 110, and may be disposed to be spaced apart from each other. An electrode lead accommodation part 231bʺʺ and an exposure hole 233'''' may be disposed to correspond to the electrode tabs as in FIG. 11.

### Embodiment 3

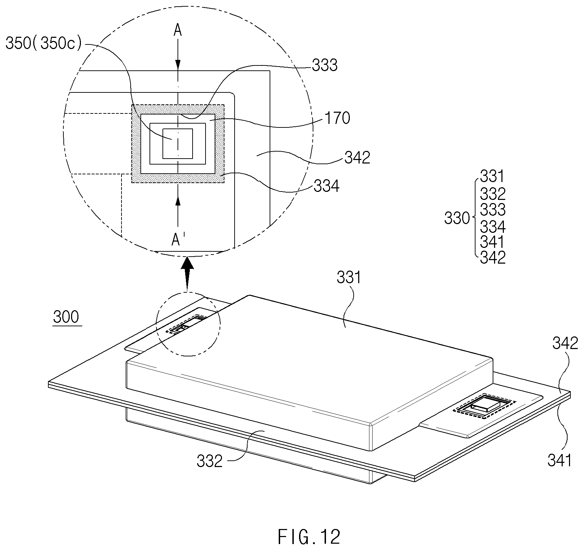

FIG. 12 is a perspective view illustrating a secondary battery according to Embodiment 3 of the present invention.

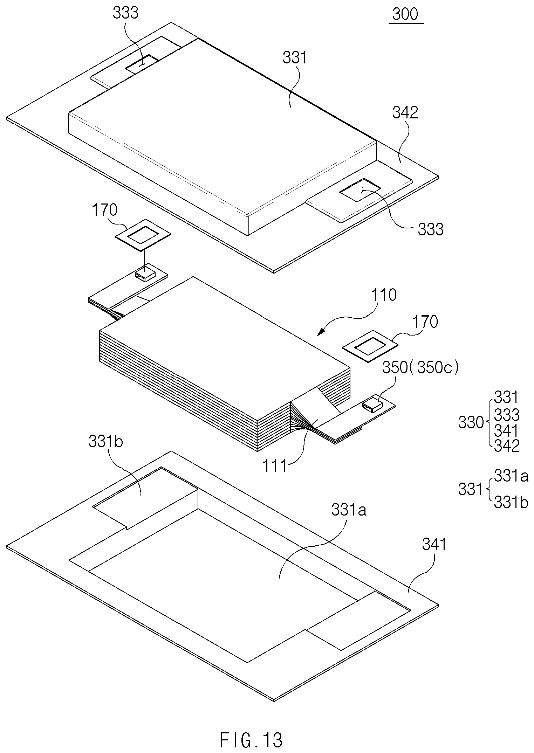

FIG. 13 is an exploded perspective view of the secondary battery in FIG. 12. The secondary battery according to Embodiment 3 is different from the secondary battery according to Embodiment 1 in terms of the structure of an electrode lead. Hereinafter, the secondary battery according to Embodiment 3 will be described by focusing on this difference. For reference, the same details of the secondary battery according to Embodiment 3 are applicable to the secondary batteries according to Embodiments 1 and 2 described above as long as there is no confliction therebetween.

As illustrated in FIG. 13, a secondary battery 300 according to this embodiment may include an electrode assembly 110, an exterior 330, and an electrode lead 350. The electrode assembly 110 may be the same as that described above.

The exterior 330 may include an accommodation part 331 for accommodating the electrode assembly 110. The exterior 330 may be a pouch type exterior. The exterior 330 may be provided so that first and second exteriors 341 and 342 disposed to face each other are coupled to each other to be sealed in a state in which the electrode assembly 110 is accommodated. Here, edges of the first and second exteriors 341 and 342 may be sealed entirely or partially. An exterior sealing part 332 (see FIG. 12) may be formed by this sealing.

As illustrated in FIG. 12, the exterior 330 may include an exposure hole 333 that is opened so as to expose at least a portion of the electrode lead 350 to the outside of the exterior 330.

The exterior 330 may include an exposure hole sealing part 334 provided to surround the exposure hole 333.

The secondary battery 300 according to this embodiment may include an insulation film 170 (see FIG. 13) disposed between the electrode lead 350 and each of exteriors 341 and 342.

As illustrated in FIG. 13, the accommodation part 331 according to this embodiment may include an electrode assembly accommodation part 331a that accommodates the electrode assembly 110. The accommodation part 331 may include an electrode lead accommodation part 331b that accommodates at least a portion of the electrode lead 350.

The electrode lead 350 according to this embodiment may be disposed inside the exterior230. The electrode lead accommodation part 331b may also be disposed inside the exterior 330 to corresponding to the electrode lead 350.

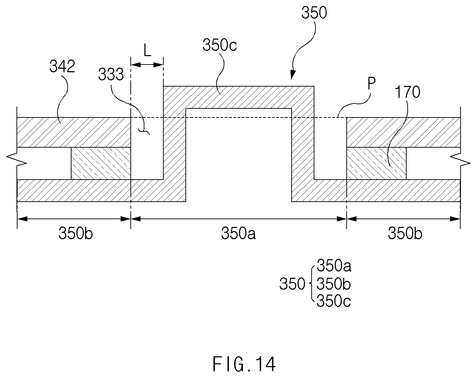

Hereinafter, the electrode lead350 according to this embodiment will be described in detail with reference to FIG. 14. FIG. 14 is a cross-sectional view taken along a line A-A' in FIG. 12.

The electrode lead 350 may include an exposed portion 350a and a non-exposed portion 350b. The exposed portion 350a is one portion of the electrode lead 350 that is exposed to the outside of an exterior 342 through the exposure hole 333. The non-exposed portion 350b is another portion of the electrode lead 350 that is connected to the exposed portion 350a, and is covered by the exterior 342to be non-exposed to the outside of the exterior 342.

The exposed portion 350a may include a protrusion 350c that protrudes toward the outside of the exterior 342 more than the non-exposed portion 350b. The protrusion 350c may protrude more than the non-exposed portion 350b by at least an outer surface (see P) of the exterior 342. FIG. 14 illustrates the protrusion 350c that protrudes from the outer surface (see P) of the exterior 342.

As illustrated in FIG. 14, the protrusion 350c may be provided by pressing a portion of the exposed portion 350a. After assuming a rectangular area in the electrode lead 350, this rectangular area may be pressed to provide the protrusion 350c in FIG. 13. Two sides, which face each other, of sides of the rectangular area may also be cut before the pressing or during the pressing. Alternatively, the protrusion may be provided by bending the electrode lead 350 in a cross-sectional shape as in FIG. 14. Alternatively, the protrusion may be formed by a method of adding a separate member.

When the protrusion 350c is provided by pressing or bending the exposed portion 350a of the electrode lead 350, the protrusion 350c may be provided in one body with the non-exposed portion 350b as the entirety or a portion of the exposed portion 350a. For example, the protrusion 350c may be a portion of the exposed portion 350a that extends from the non-exposed portion 350b as one body, and may also have a U-shaped cross-sectional shape by including a vertical extension portion, which extends toward the exposure hole 333, and a horizontal extension person which extends horizontally from the vertical extension portion as one body.

For reference, when a surface-treated part (see the surface-treated part 151 in FIG. 3) is formed on the electrode lead 350, the protrusion 350c may be formed by performing laser etching or the like on a surface of the electrode lead 350 to form the surface-treated part, fusing an insulation film onto the surface-treated part, and then pressing or bending a portion of the electrode lead 350 in a U shape.

In order to electrically connecting the electrode lead 350 to another portion through the exposure hole 333, a portion of the electrode lead 350 may protrude toward the outside of the exterior 342 considering a thickness of the exterior 342 or the like. As the electrode lead 350 according to this embodiment includes the protrusion 350c protruding toward the outside of the exterior 342, the electrode lead 350 may be easily electrically connected to the other portion. Even when the electrode lead 350 is welded to another portion (e.g., busbar), easiness in welding may be increased. When the protrusion 350c protrudes from the non-exposed portion 350b by at least the outer surface (see P) of the exterior 342, this easiness may be more increased.

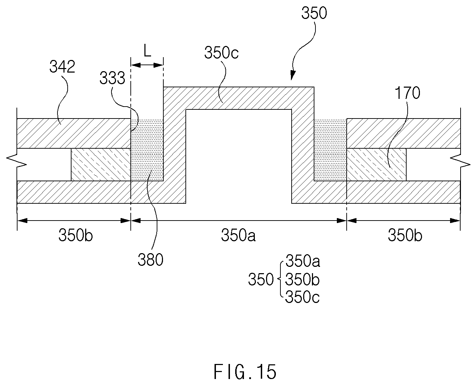

The protrusion 350c may be spaced a predetermined distance L from an edge of the exposure hole 333. As the exposure hole 333 is defined, the metal layers 141a and 142a (see FIG. 4) of the exterior 342 may protrude to a side of the exposure hole 333. However, when the metal layers of the exterior 342 are in contact with the protrusion 350c of the electrode lead 350, electrical short-circuit may occur. In order to prevent the electrical short-circuit, the spacing as above may be needed. A spaced distance L may be 0.5 mm or greater. Alternatively, as illustrated in FIG. 15, for electrical insulation between the protrusion 350c and the exterior 342, an insulation member 380 may be disposed in an empty space defined by the spacing as above.

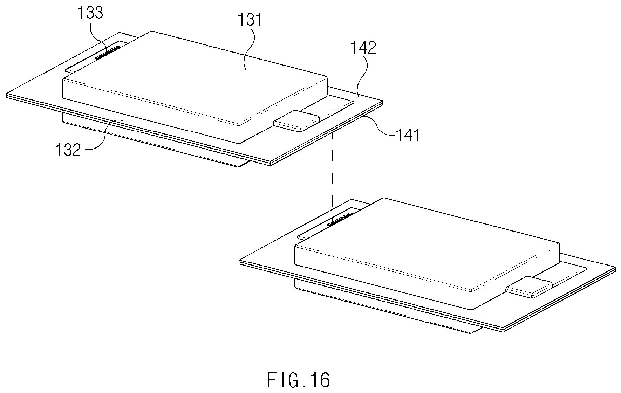

In the secondary battery according to Embodiment 1, electrical insulation may be achieved without the protrusion 350c as described above, in FIGS. 16 and 17.

In the secondary battery according to Embodiment 1, the exposure hole 133 for exposing the electrode lead 150 is defined in the exterior 130. When the secondary batteries are in close contact with each other as in FIG. 17 in a state in which the secondary batteries are disposed so that the exposure holes 133 face each other as in FIG. 16, the secondary batteries may be electrically connected to each other.

For example, as illustrated in FIG. 16, an exposure hole defined in a front surface of one secondary battery may be disposed to correspond to an exposure hole defined in a rear surface of another secondary battery. Then, when the secondary batteries are stacked as in FIG. 17, the secondary batteries may be electrically connected to each other.

Considering a small thickness of the exterior, the electrode leads may be in contact with each other solely by close contact or stacking as above. For stable contact of the electrode leads, the protrusion described above may be provided on the electrode lead 150. Alternatively, a separate connecting member (not shown) that electrically connect the electrode leads exposed through the exposure hole 133 to each other may be further disposed.

The description of the present invention is intended to be illustrative, and various changes and modifications can be made by those of ordinary skill in the art to which the present invention pertains, without departing from the spirit and scope of the present invention as defined by the appended claims.

Therefore, the embodiments set forth herein are to describe the technical spirit of the present invention and not to limit. The scope of the technical spirit of the present invention is not limited by the embodiments.

Moreover, the protective scope of the present invention should be determined by reasonable interpretation of the appended claims and all technical concepts coming within the equivalency range of the present application should be interpreted to be in the scope of the right of the present application.

## Claims

1. A secondary battery comprising:
an electrode assembly comprising an electrode tab;
an exterior comprising an accommodation part configured to accommodate the electrode assembly; and
an electrode lead connected to the electrode tab of the electrode assembly, and disposed inside the exterior,
wherein the exterior further comprises an exposure hole that is opened to expose a portion of the electrode lead to an outside of the exterior,
wherein the electrode lead comprises:
an exposed portion exposed to the outside of the exterior through the exposure hole; and
a non-exposed portion connected to the exposed portion, and covered by the exterior to be non-exposed to the outside of the exterior,
wherein the exposed portion comprises a protrusion protruding toward the outside of the exterior more than the non-exposed portion.

2. The secondary battery of claim 1, wherein the protrusion protrudes more than the non-exposed portion by at least an outer surface of the exterior.

3. The secondary battery of claim 1, wherein the protrusion is spaced a predetermined distance from an edge of the exposure hole.

4. The secondary battery of claim 3, further comprising an insulation member disposed in an empty space provided by the spacing, for electrical insulation between the protrusion and the exterior.

5. The secondary battery of claim 1, wherein the exterior comprises:
an exterior sealing part configured to at least partially surround the accommodation part; and
an exposure hole sealing part configured to surround the exposure hole,
wherein the exterior sealing part is more tightly sealed than the exposure hole sealing part.

6. The secondary battery of claim 5, wherein the exterior sealing part is formed by welding, and
the exposure hole sealing part is formed by fusion.

7. The secondary battery of claim 1, wherein the exterior further comprises:
a first exterior comprising a first metal layer;
a second exterior disposed to face the first exterior so as to form the accommodation part together with the first exterior, the second exterior comprising a second metal layer;
an exterior sealing part configured to couple the first and second exteriors to each other to be sealed, and at least partially surround the accommodation part; and
an exposure hole sealing part disposed on an exposure hole exterior that is an exterior, in which the exposure hole is defined, of the first and second exteriors, and configured to surround the exposure hole.

8. The secondary battery of claim 7, wherein the exterior sealing part is formed by welding between the first and second metal layers.

9. The secondary battery of claim 7, wherein the first exterior further comprises a first resin layer disposed inside the first metal layer,
the second exterior further comprises a second resin layer disposed inside the second metal layer to face the first resin layer, and
the exterior sealing part is formed by welding of the first and second metal layers in a state in which the first and second metal layers are in direct contact with each other without the first and second resin layers.

10. The secondary battery of claim 7, wherein each of the first and second metal layers comprises stainless steel.

11. The secondary battery of claim 7, further comprising an insulation film disposed between the exposure hole exterior and the electrode lead so as to surround a portion, which is exposed through the exposure hole, of the electrode lead,
wherein the exposure hole sealing part is formed by fusion between the insulation film and a resin layer of the exposure hole exterior, which is disposed to face the insulation film.

12. The secondary battery of claim 7, wherein the exterior sealing part is provided to entirely surround the accommodation part of the exterior except a portion at which the first and second exteriors are connected to each other, and
the electrode lead is disposed inside the exterior without passing through the exterior sealing part.

13. The secondary battery of claim 1, wherein the electrode lead extends in a direction crossing an extension direction of the electrode tab to be disposed inside the exterior.

14. The secondary battery of claim 1, wherein the accommodation part comprises:
an electrode assembly accommodation part configured to accommodate the electrode assembly; and
an electrode lead accommodation part configured to accommodate at least a portion of the electrode lead.

15. The secondary battery of claim 14, wherein the electrode assembly accommodation part is pre-molded in a shape for accommodating the electrode assembly before the electrode assembly is accommodated, and
the electrode lead accommodation part is pre-molded in a shape for accommodating the electrode lead before the electrode lead is accommodated.

16. The secondary battery of claim 1, wherein the electrode lead is provided to be electrically connected to an electrode lead of another secondary battery through the protrusion.

17. The secondary battery of claim 7, further comprising an insulation film disposed between the exposure hole exterior and the electrode lead so as to surround a portion, which is exposed through the exposure hole, of the electrode lead,
wherein a surface-treated part for an increase in surface roughness is partially provided on a surface of the electrode lead,
wherein an area in which the surface-treated part is provided comprises an area, which faces the insulation film, of the surface of the electrode lead.

18. A secondary battery comprising:
an electrode assembly comprising an electrode tab;
an exterior comprising an accommodation part configured to accommodate the electrode assembly; and
an electrode lead connected to the electrode tab of the electrode assembly, and disposed inside the exterior,
wherein the exterior further comprises an exposure hole that is opened to expose at least a portion of the electrode lead to an outside of the exterior.

19. The secondary battery of claim 18, wherein the electrode lead is provided to be electrically connected to an electrode lead of another secondary battery through the exposure hole.

20. The secondary battery of claim 18, wherein the electrode lead extends in a direction crossing an extension direction of the electrode tab, and is disposed inside the exterior so that the electrode tab is disposed on a central portion of the electrode lead on the basis of the crossing direction.

21. The secondary battery of claim 18, wherein the electrode tab is bent toward one side surface of the electrode assembly, from which the electrode tab protrudes, so that one side surface of the electrode lead faces the one side surface of the electrode assembly.

22. The secondary battery of claim 18, wherein the electrode tab is bent toward an outermost surface of the electrode assembly so that one side surface of the electrode lead faces the outermost surface of the electrode assembly on the basis of a direction in which an electrode and a separator of the electrode assembly are stacked.

23. A secondary battery comprising:
an electrode assembly comprising an electrode tab;
an exterior comprising an accommodation part configured to accommodate the electrode assembly; and
an electrode lead connected to the electrode tab of the electrode assembly, and disposed inside the exterior,
wherein the accommodation part comprises:
an electrode assembly accommodation part configured to accommodate the electrode assembly; and
an electrode lead accommodation part configured to accommodate at least a portion of the electrode lead.

24. The secondary battery of claim 23, wherein the exterior further comprises an exterior sealing part configured to at least partially surround the accommodation part,
wherein the electrode lead accommodation part is disposed on the exterior sealing part to be disposed inside the exterior to accommodate the electrode lead.

25. The secondary battery of claim 24, wherein a side, which faces the electrode assembly accommodation part, of the electrode lead accommodation part communicates with the electrode assembly accommodation part, and
other sides of the electrode lead accommodation part are surrounded by the exterior sealing part.

26. The secondary battery of claim 23, wherein the exterior further comprises an exposure hole that is opened to expose at least a portion of the electrode lead to an outside of the exterior.

27. The secondary battery of claim 26, wherein the electrode tab is bent toward one side surface of the electrode assembly, from which the electrode tab protrudes, so that one side surface of the electrode lead faces the one side surface of the electrode assembly, and
the exposure hole is defined in one side surface of the exterior, which faces another side surface of the electrode lead due to bending of the electrode tab.

28. The secondary battery of claim 26, wherein the electrode tab is bent toward an outermost surface of the electrode assembly so that one side surface of the electrode lead faces the outermost surface of the electrode assembly on the basis of a direction in which an electrode and a separator of the electrode assembly are stacked, and
the exposure hole is defined in one side surface of the exterior, which faces the other side surface of the electrode lead due to the bending of the electrode tab.
